# EUROPÄISCHE PATENTSCHRIFT

(11) **EP 0 499 655 B1**
(45) Veröffentlichungstag und Bekanntmachung des Hinweises auf die Patenterteilung: **13.09.1995**
(21) Anmeldenummer: 91102255.6
(22) Anmeldetag: 18.02.1991
(51) Int. Cl.: A01G 9/10

(54) **Verfahren zur Handhabung von Pflanz- oder Stecktöpfchen**
Process for handling small pots for plants or cuttings
Procédé pour la manipulation des petits pots pour plantes ou pour boutures

(43) Veröffentlichungstag der Anmeldung: 26.08.1992
(73) Patentinhaber: Steverding, Franz, D-46414 Rhede (DE)
(72) Erfinder: Steverding, Franz, D-46414 Rhede (DE)
(74) Vertreter: Habbel, Hans-Georg, Dipl.-Ing.

(56) Entgegenhaltungen:
- DE-U- 8 902 893
- FR-A- 1 579 046
- GB-A- 510 136
- GB-A- 2 064 934
- GB-A- 2 140 263

## Beschreibung

Die Erfindung bezieht sich auf ein Verfahren und eine Vorrichtung zur Handhabung von mit einer Papierumhüllung versehenen Pflanz- oder Stecktöpfchen.

In dem DE-U-89 02 893 wird eine Vorrichtung zur Herstellung von Pflanztöpfchen beschrieben, bei welcher Pflanzenerde durch ein Papierband umhüllt wird, so daß ein zylindrischer, aus einer Papierumhüllung bestehender Pflanzerde-Strang gebildet wird, von dem dann einzelne Töpfchen abgetrennt werden. Diese Töpfchen werden dann weiteren Verarbeitungsbetrieben zugestellt, die die Töpfchen mit Stecklingen oder Samenkörnern versehen. Hierzu werden die Töpfchen in einem gewissen Abstand auf Pflanzentische aufgestellt, die üblicherweise aus Beton bestehen. Haben die jungen Pflanzen eine entsprechende Größe erreicht, werden sie weiteren Verarbeitungsbetrieben zugeführt.

Es ist offensichtlich, daß die Handhabung derartiger Töpfchen arbeitsintensiv und raumaufwendig ist und man ist daher bereits dazu übergegangen, die Pflanztöpfchen durch Zusammenpressen zu entwässern, so daß tablettenartige Pflanztöpfchen - sogenannte Quelltöpfchen - geschaffen werden. Im Stand der Technik sind diese Quelltöpfchen von einem Nylongewebe umgeben, das sich im Boden nicht zersetzt.

Aus dem DE-U-87 13 441 ist es bekannt, sogenannte Quellkörper aus von einem Kunststoffnetz umgebenem Torf oder Torf-Bitumengemisch auf eine Folie zu heften oder mit der Folie zu verschweißen. Mittels dieser Folie werden sie in Form einer Rolle transportiert und durch Entrollen der Packung auf Gewächshaustischen großflächig ausgelegt. Diese Kunststoffnetze und auch die Folien bleiben im Boden als unerwünschter Rückstand zurück.

Der Erfindung liegt die Aufgabe zugrunde, ein Verfahren und eine Vorrichtung zur Handhabung derartiger Pflanztöpfchen zu schaffen, bei welchem sichergestellt ist, daß später im Erdreich keine unverwesbaren Rückstände zurückbleiben.

Diese der Erfindung zugrundeliegende Aufgabe wird durch die Merkmale der Kennzeichnenden Teile der Ansprüche 1 und 3 gelöst.

Durch die erfindungsgemäße Verfahrensweise werden die Pflanz- oder Stecktöpfchen in einer Hydraulikpresse zusammengepreßt, so daß dadurch die Pflanzenerde komprimiert und gleichzeitig entwässert und damit getrocknet wird. Die Papierumhüllung macht diese Kompression und Trocknung ohne Beschädigung mit. Diese dann tablettenartig ausgebildeten Pflanz- oder Stecktöpfchen werden dann einer Trägerbahn zugeführt, die aus einem sich in Feuchtigkeit rückstandslos zersetzenden Papiervlies besteht. Vorzugsweise wird dabei so vorgegangen, daß die Trägerbahn mit einem in der Wärme aktivierbaren Klebstoff an ihrer Oberseite versehen ist, so daß bei Aufgabe der getrockneten Pflanz- oder Stecktöpfchen und bei gleichzeitiger Aktivierung des sich in Feuchtigkeit rückstandslos zersetzenden Klebstoffes die Pflanz- oder Stecktöpfchen auf der Oberseite der Trägerbahn fest aufkleben. Die Zuführung der Töpfchen zur Trägerbahn kann dabei maschinell erfolgen.

Die Trägerbahn kann nunmehr aufgerollt werden und wird vom Abnehmer auf den z. B. aus Beton bestehenden Pflanztischen einfach aufgerollt, wobei die Pflanz- oder Stecktöpfchen dann bereits den gewünschten Abstand aufweisen. Wird nunmehr der Tisch gewässert, saugt sich die Trägerbahn voll Wasser und gleichzeitig saugen sich die Pflanz- oder Stecktöpfchen voll Wasser und quellen auf. Sobald sie aufgequollen sind, können sie mit den Stecklingen oder Samenkörnern versehen werden.

Die Trägerbahn hat, da sie aus einem Papiervlies besteht, hygroskopische Eigenschaften und führt also das Wasser aus der Umgebung der aufgesetzten Pflanz- oder Stecktöpfchen den eigentlichen Pflanz- oder Stecktöpfchen zu.

Die Erfindung wird nachfolgend anhand einer Zeichnung erläutert.

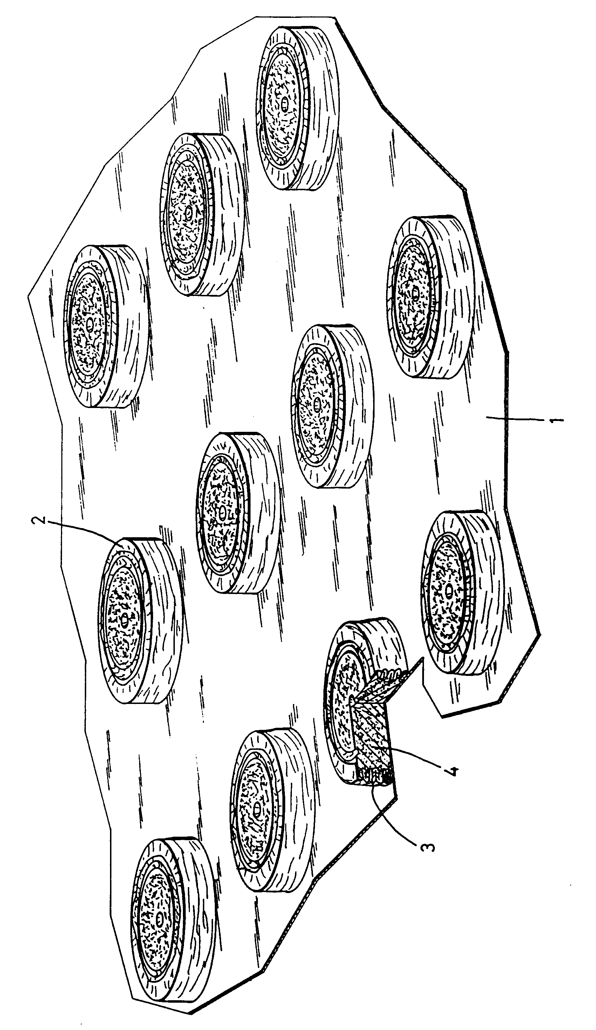

In der Zeichnung ist eine Trägerbahn 1 dargestellt, die aus einem hygroskopischen Papiervlies gebildet wird. Dieses Papiervlies ist in Feuchtigkeit rückstandslos zersetzbar und durch entsprechende Gestaltung der Papiervliesbahn kann die Haltbarkeitsdauer dieser Trägerbahn 1 eingestellt werden.

Auf der Trägerbahn 1 sind Pflanz- oder Stecktöpfchen 2 dargestellt. Diese Pflanz- oder Stecktöpfchen 2 sind als sogenannte Quell-Pflanz- oder -Stecktöpfchen ausgebildet, d. h. die ursprünglich mit Pflanzenerde gefüllten Papiertöpfchen werden durch hydraulischen Druck zusammengepreßt und auf diese Weise entwässert und getrocknet.

In der Zeichnung ist erkennbar, wie die Papierumhüllung 3 sich beim Preßvorgang zusammengefaltet hat und die von der Papierumhüllung 3 umschlossene Pflanzenerde ist mit 4 bezeichnet.

Auf der Oberseite der Trägerbahn ist eine wärmeaktivierbare, aber sich in Wasser zersetzende Klebstoffschicht angebracht, mit der die Pflanz- oder Stecktöpfchen 2 in bestimmtem gewollten Abstand auf der Trägerbahn 1 festgelegt sind. Hierbei wird so vorgegangen, daß die Trägerbahn 1 über eine Wärmequelle geführt wird, so daß die auf der Oberseite der Trägerbahn 1 vorgesehene Klebstoffschicht aktiviert wird. In diesem Bereich werden dann die Pflanz- oder Stecktöpfchen 2 aufgebracht und haften fest an der Trägerbahn 1, sobald diese abkühlt.

Die mit den Pflanz- oder Stecktöpfchen 2 versehene Trägerbahn 1 kann aufgerollt werden und in diesem Zustand zu den Abnehmern verbracht werden, die dann durch einfaches Abrollen die mit den Pflanz- oder Stecktöpfchen 2 versehene Trägerbahn 1 auf ihren Arbeitstischen oder Pflanztischen aufbringen.

Die Papierumhüllung 3 wird so eingestellt, daß sie sich in der Feuchtigkeit etwas langsamer zersetzt als die Trägerbahn 1, so daß die Stecklinge oder Sämlinge ausreichend lang sicher gehalten werden.

## Patentansprüche

1. Verfahren zur Handhabung von mit einer Papierumhüllung versehenen, durch Zusammenpressen entwässerten Pflanz- oder Stecktöpfchen, dadurch gekennzeichnet, daß die sich in Feuchtigkeit zersetzenden Papierumhüllungen der Pflanz- oder Stecktöpfchen (2) einer aus einem sich rückstandslos in Feuchtigkeit zersetzenden, hygroskopischen Papiervlies bestehenden Trägerbahn (1) zugeführt werden, auf der sie in einem dem Verwendungszweck entsprechenden Abstand mit einem wärmeaktivierbaren, aber sich in Feuchtigkeit rückstandslos zersetzenden Klebstoff festgelegt werden.

2. Verfahren nach Anspruch 1, dadurch gekennzeichnet, daß im Bereich der Aufgabestelle der Pflanz- oder Stecktöpfchen (2) auf die Trägerbahn (1) die Trägerbahn (1) erhitzt und damit die Klebstoffschicht aktiviert wird.

3. Vorrichtung zur Handhabung von mit einer Papierumhüllung versehenen Pflanz- oder Stecktöpfchen, gekennzeichnet durch eine aus einem sich in Feuchtigkeit rückstandslos zersetzenden, hygroskopischen Papiervlies bestehenden Trägerbahn (1), auf der die sich mit einer in Feuchtigkeit zersetzenden Papierumhüllung versehenen Pflanz- oder Stecktöpfchen (2) in einem dem Verwendungszweck entsprechenden Abstand mittels eines sich in Feuchtigkeit rückstandslos zersetzenden Klebmittels festgelegt sind.

## Claims

1. A method for handling plant or cutting pots having a paper jacket and drained by compression, characterized in that the paper jackets of the plant or cutting pots (2), which jackets decompose in moisture, are supplied to a carrier surface (1) consisting of a hygroscopic paper mat decomposing without residue in moisture, to which carrier surface (1) they are fixed, at distances appropriate to the application, with a heat-activatable adhesive which decomposes without residue in moisture.

2. A method according to claim 1, characterized in that, in the area of the point where the plant or cutting pots (2) are fed to the carrier surface (1), said carrier surface (1) is heated and the adhesive layer is thus activated.

3. A device for handling plant or cutting pots having a paper jacket, characterized by a carrier surface (1) consisting of a hygroscopic paper mat decomposing without residue in moisture, to which carrier surface (1) the plant or cutting pots (2) having a paper jacket decomposing in moisture are fixed, at distances appropriate to the application, by means of an adhesive which decomposes without residue in moisture.

## Revendications

1. Procédé pour la manipulation de petits pots pour plantes ou boutures pourvus d'une enveloppe de papier et déshydratés par compression, caractérisé en ce que les enveloppes en papier se décomposant à l'humidité des petits pots pour plantes ou boutures (2) sont acheminées vers une bande de transport (1) faite de feutre de papier hygroscopique qui se décompose sans résidus à l'humidité, sur laquelle elles sont fixées à des intervalles adaptés au but d'utilisation par une colle pouvant être activée par la chaleur mais se décomposant sans résidus à l'humidité.

2. Procédé selon la revendication 1, caractérisé en ce que la bande de transport (1) est chauffée dans la région du point de dépose des petits pots pour plantes ou boutures (2) sur la bande de transport (1) et la couche de colle est ainsi activée.

3. Dispositif pour la manipulation de petits pots pour plantes ou boutures pourvus d'une enveloppe de papier et déshydratés par compression, caractérisé en ce qu'il comporte une bande de transport (1) faite d'un feutre de papier hygroscopique qui se décompose sans résidus à l'humidité, sur laquelle les petits pots pour plantes ou boutures (2), pourvus d'enveloppes en papier qui se décomposent à l'humidité, sont fixés à des intervalles adaptés au but d'utilisation par une colle pouvant être activée par la chaleur mais se décomposant sans résidus à l'humidité.
